# EUROPÄISCHE PATENTSCHRIFT

(11) **EP 3 380 379 B1**
(45) Veröffentlichungstag und Bekanntmachung des Hinweises auf die Patenterteilung: **07.09.2022**
(21) Anmeldenummer: 16801489.2
(22) Anmeldetag: 25.11.2016
(51) Int. Cl.: B60W 20/00, B60W 50/00, B60K 6/48, B60W 10/06, B60W 10/08, B60W 20/40, F02N 11/00

(54) **STEUERSYSTEM MIT MINDESTENS EINER ELEKTRONISCHEN STEUEREINHEIT ZUR STEUERUNG EINES VERBRENNUNGSMOTORS IN EINEM HYBRIDFAHRZEUG**
CONTROL SYSTEM WITH AT LEAST AN ELECTRONIC CONTROL UNIT FOR CONTROLLING A COMBUSTION ENGINE IN A HYBRID VEHICLE
SYSTÈME DE COMMANDE D'AU MOINS UNE UNITÉ DE COMMANDE ÉLECTRONIQUE POUR COMMANDER UN MOTEUR À COMBUSTION DANS UN VÉHICULE HYBRIDE

(30) Priorität: 27.11.2015 DE 102015223588
(43) Veröffentlichungstag der Anmeldung: 03.10.2018
(73) Patentinhaber: Bayerische Motoren Werke Aktiengesellschaft, 80809 München (DE)
(72) Erfinder: WIESBECK, Ferdinand, 80809 München (DE); VAN GELIKUM, Mark, 81673 München (DE); SMAJLOVIC, Nordin, 85521 Ottobrunn (DE)
(86) Internationale Anmeldenummer: PCT/EP2016/078856
(87) Internationale Veröffentlichungsnummer: WO 2017/089569

(56) Entgegenhaltungen:
- DE-A1- 10 035 027
- DE-A1-102008 015 046
- DE-A1-102011 077 656
- DE-A1-102013 104 533
- FR-A1- 2 863 953
- US-A1- 2015 329 105

## Beschreibung

Die Erfindung bezieht sich auf ein Steuersystem mit mindestens einer elektronischen Steuereinheit zur Steuerung eines Verbrennungsmotors in einem Hybridfahrzeug.

Bereits seit vielen Jahren sind Hybridfahrzeuge auch schon als Serienfahrzeuge bekannt, die mindestens einen Verbrennungsmotor und mindestens einen Elektromotor als Antriebsmotoren enthalten. Derartige Hybridfahrzeuge weisen Steuersysteme mit mindestens einer elektronischen Steuereinheit auf, die insbesondere durch entsprechend programmierte Funktionsmodule verschiedene Betriebsverfahren zur Auswahl eines an die jeweils aktuelle Fahrsituation angepassten Betriebsmodus durchführen. Auswählbare Betriebsmodi sind insbesondere rein elektrisches Fahren (nur der Elektromotor treibt an; "E-Modus", "E-Fahren"), rein verbrennungsmotorisches Fahren (nur der Verbrennungsmotor treibt an) und/oder hybridangetriebenes Fahren (sowohl der Elektromotor als auch der Verbrennungsmotor treiben an).

Vorrangig berücksichtigen bekannte Betriebsverfahren den Ladezustand der Batterie oder eines anderen elektrischen Speichers (z.B. Super-Cap) zur Auswahl des Betriebsmodus. Teilweise werden dabei auch Parameter wie die aktuelle Fahrzeuggeschwindigkeit, das aktuelle Fahrverhalten oder bestimmte aktuell eingestellte Kundenfunktionen berücksichtigt.

Aus der Druckschrift DE 10 2011 077 656 A1 ist ein Verfahren zum Entscheiden über das Abschalten eines Antriebsmotors beim Zufahren auf eine vorausliegende Verkehrsampel bekannt. Hierbei wird eine Dauer geschätzt, in der kein positives Antriebsmoment angefordert werden wird, also keine Lastanforderung zu erwarten ist. Zur Bestimmung dieser Dauer wird zumindest Ampelphaseninformation für die Ampel verwendet. Über das Abschalten des Antriebsmotors wird dann in Abhängigkeit der geschätzten Dauer entschieden.

Es ist Aufgabe der Erfindung, ein Steuersystem mit einem Betriebsverfahren eingangs genannter Art weiter zu verbessern.

Diese Aufgabe wird erfindungsgemäß durch die Gegenstände der unabhängigen Patentansprüche gelöst. Vorteilhafte Weiterbildungen der Erfindung sind in den abhängigen Ansprüchen enthalten.

Bei dem erfindungsgemäße Steuersystem mit mindestens einer elektronischen Steuereinheit zur Steuerung eines Verbrennungsmotors in einem Hybridfahrzeug ist die Steuereinheit derart ausgestaltet, dass sie Eingangssignale zur Erfassung von Daten zur Erkennung einer aktuellen Situation und zur Erkennung mindestens einer in naher Zukunft vorherrschenden Situation bezüglich eines erwarteten Geschwindigkeitsverlaufs und eines prädizierten Ampelphasen-Wechsels auswertet und abhängig davon sowie von einer lastbezogenen Fahrerinteraktion das Zustarten und Ablegen des Verbrennungsmotors unabhängig von einer aktuell vorgegebenen E-Fahr-Geschwindigkeitsgrenze und/oder Lastgrenze situationsadaptiv steuert.

Die Erfindung umfasst allgemein ein Verfahren zur Steuerung des Zustarts und des Ablegens eines Verbrennungsmotors in einem Hybridfahrzeug, wobei mittels einer Bewertung der aktuellen Situation sowie vorausliegender Situationen, vorzugsweise in einem definierten Vorausschaubereich, im Hinblick auf einen erwarteten Geschwindigkeitsverlauf und vorzugsweise auch auf einen Lastverlauf in Abhängigkeit von einer Fahrerinteraktion und/oder vom Ladungszustand des Hochvoltspeichers das Zustart- und Ablegeverhalten in definierter Weise, auf die weiter unten genauer eingegangen wird, optimiert wird.

Erfindungsgemäß werden grundsätzlich Daten zur Erkennung einer aktuellen Situation und zur Erkennung mindestens einer in naher Zukunft (z.B. definierter Vorausschauhorizont < 5km) herrschenden Situation erfasst und bezüglich dem erwarteten Geschwindigkeitsverlauf ausgewertet. Derartige Daten zur Vorausschau des Geschwindigkeitsverlaufs umfassen insbesondere:
- Kartendaten zu Umfeld- und/oder Verkehrsführungsinformationen von Navigationssystemen (z. B. ADAS mit RTTI) sowie (fahrerspezifisch) lernende Systeme zur Prognose der wahrscheinlichsten vorausliegenden Route, zur Prognose von Geschwindigkeiten in vorausliegenden Kurven, zur Erfassung von vorausliegenden und aktuellen Tempolimits, zur Prognose des vorausliegenden Steigungsverlaufs der Strecke, zur Prognose der durchschnittlichen Geschwindigkeit in Abhängigkeit der Verkehrsdichte auf der vorausliegenden Strecke, usw. und/oder
- Schildererkennungssysteme (z.B. KAFAS), insbesondere zur Erkennung von Verkehrsschildern mit Auswirkung auf die zu erwartende Geschwindigkeit und/oder
- Kamerasysteme zur Erfassung des aktuellen Zustands der vorausliegenden und relevanten Signallichtanlage (Erkennung des Ampelzustands) sowie (lernende) Systeme im Fahrzeug oder via Backend zur zeitlichen Prognose der relevanten Signallichtanlagen (Vorausschau des Ampelzustands) und/oder
- Fahrzeugsensorik (z.B. Radar und KAFAS) zur Erfassung vorausfahrender anderer Verkehrsteilnehmer (insbes. Geschwindigkeit und Beschleunigung des Vorderfahrzeugs) und/oder
- Sämtliche weitere Systeme, die zu einer Prognose des erwarteten Geschwindigkeitsverlaufs beitragen können.

Darüber hinaus wird mindestens eine lastbezogene Fahrerinteraktion, insbesondere durch die Erfassung der Fahrpedalstellung der jeweils aktuelle Lastwunsch, ermittelt.

Erfindungsgemäß wird das Zustarten und Ablegen des Verbrennungsmotors vorrangig abhängig vom erwarteten Geschwindigkeitsverlauf im vorgegebenen Vorausschauhorizont und von der aktuellen lastbezogenen Fahrerinteraktion gesteuert. Darüber hinaus kann das Zustart- und Ablegeverhalten abhängig vom Betriebszustand des Fahrzeugs, wie insbesondere des Ladungszustands des Hochvoltspeichers, optimiert werden.

Der erwartete Geschwindigkeitsverlauf wird mit an sich üblichen ladezustandsabhängigen festen oder variablen maximalen E-Fahr-Geschwindigkeitsgrenzen für rein elektrisches Fahren (E-Modus) bei geladenem Zustand (CD="charge depleting", obere E-Fahr-Geschwindigkeitsgrenze) und bei entladenem Zustand (CS="charge sustaining", untere E-Fahr-Geschwindigkeitsgrenze) verglichen. Wird die aktuell gültige E-Fahr-Geschwindigkeitsgrenze durch die Ist-Geschwindigkeit unterschritten, wird nach dem Stand der Technik der Verbrennungsmotor sofort abgelegt. Wird die aktuell gültige E-Fahr-Geschwindigkeitsgrenze durch die Ist-Geschwindigkeit überschritten, wird nach dem Stand der Technik der Verbrennungsmotor sofort zugestartet. Des Weiteren erfolgt nach dem Stand der Technik ein Zustarten bzw. Ablegen auch außerhalb dieser Geschwindigkeitsgrenzen, sofern von Geschwindigkeit und Ladungszustand der Batterie abhängige Lastgrenzen überschritten bzw. unterschritten werden. Durch die Erfindung werden der erwartete Geschwindigkeitsverlauf und Lastverlauf (oder Laständerung) und nicht nur die aktuelle Geschwindigkeit und die aktuelle Last im Hinblick auf diese bisher starr gesetzten Grenzen betrachtet. Die in naher Zukunft liegende neue(n) Situation(en) kann/können erfindungsgemäß zur (stufenlosen) Verschiebung nach oben und unten und/oder zum Ignorieren dieser bisher situationsunabhängig vorgegebenen Zustartgrenzen führen.

Die Steuerung mittels des erfindungsgemäßen Steuersystems bzw. das erfindungsgemäße Verfahren zur Steuerung des Zustarts oder des Ablegens eines Verbrennungsmotors wird in definierter Weise durchgeführt, nämlich vorzugsweise derart,
- dass Phasen mit nur kurz abgelegtem oder nur kurz zugestartetem Verbrennungsmotor vermieden werden und/oder
- dass der E-Modus bei vergleichsweise niedriger Last möglichst lange beibehalten wird oder bei vergleichsweise hoher oder ansteigender Last vermieden wird und/oder
- dass ein Zustart des Verbrennungsmotors bevorzugt zu Beginn von Beschleunigungsvorgängen und nicht während Beschleunigungsvorgängen und nicht bei Konstantfahrt vorgenommen wird.
- Dass zu erwartende lange Verzögerungen bevorzugt mit abgelegtem Verbrennungsmotor gefahren werden
- Dass die Anzahl an Zustart- und Ablegevorgängen im Kundenbetrieb verringert werden.

Im Fokus des erfindungsgemäßen Steuersystems steht die Anwendung einer Ampelphasenprädiktion, die an sich bekannt ist (vgl. z. B. die nicht vorveröffentlichte DE 10 2016 210071.8 der Anmelderin) aber ebenfalls noch weitergebildet werden kann. Über eine Ampelphasenprädiktion kann beispielsweise mittels zeitlich gelernter Ampelphasen oder mittels sendender Infrastruktur (insbesondere Ampelanlagen) die Dauer bis zu einem Wechsel der Ampelphase vorbestimmt werden. Das erfindungsgemäße System ist in an sich üblicher Art mit einer Empfangs- und Auswerteeinheit für derartige Infrastruktur-Daten ausgestattet. Die elektronische Steuereinheit greift auf diese Infrastruktur-Daten zurück.

Dabei werden erfindungsgemäß insbesondere mittels einer entsprechend ausgestalteten und programmierten Steuereinheit Eingangssignale zur Erfassung von Daten zur Erkennung einer aktuellen Situation und zur Erkennung mindestens einer in naher Zukunft vorherrschenden Situation bezüglich eines erwarteten Geschwindigkeitsverlaufs ausgewertet. Das Zustarten oder Ablegen des Verbrennungsmotors wird bei Auftreten einer lastbezogenen Fahrerinteraktion (z.B. bei Loslassen des Gaspedals oder bei Durchtreten des Gaspedals) in der aktuellen Situation unabhängig von einer aktuell vorgegebenen E-Fahr-Geschwindigkeitsgrenze gesteuert, wenn als eine in naher Zukunft vorherrschende Situation über eine Ampelphasenprädiktion ein Ampelphasenwechsel erkannt bzw. erwartet wird.

Durch die Erfindung werden folgende Vorteile erreicht:
1) Steigerung des Fahrerlebnisses im E-Modus durch
   - Verlängerung der Fahrphase im E-Modus (mittels Reduktion lastbedingter Zustart in erwarteter Niedriglastsituation)
   - energetische Optimierung
   - Zustartrobustheit
2) Verbesserung von Komfort, Akustik und Kundennachvollziehbarkeit der Betriebsstrategie durch
   - Vermeidung von kurzzeitigem Ablegen bzw. Zustarten des Verbrennungsmotors
   - Reduktion von Ablegeschwingungen
   - Zustartrobustheit (im unteren Geschwindigkeitsband)
   - Reduktion der Zustart- und Ablegevorgänge im Kundenbetrieb
   - Vermeidung von Zustartvorgängen bei Konstantfahrten (u.a. mittels Verdeckung in Beschleunigungen)
   - Vorziehen von Zustarts vor Hochlastsituationen (Vermeidung hoher Ankoppeldrehzahl)
3) Verbrauchsreduzierung bzw. Reichweitensteigerung durch
   - Verhinderung von unnötigem E-Modus-Fahren bei erwarteter hoher Last
   - Reduktion der Zustartverluste mittels Vermeidung unnötiger Ablegevorgänge
   - Erhöhte Nutzung von Rekuperationsenergie durch frühzeitiges Ablegen des Verbrennungsmotors
4) Sportlichkeit bzw. Responseverbesserung durch
   - Vermeidung von nur kurzzeitigen Ablegevorgängen vor Hochlastsituationen
   - Frühzeitiges Zustarten des Verbrennungsmotors vor hoher Lastanforderung

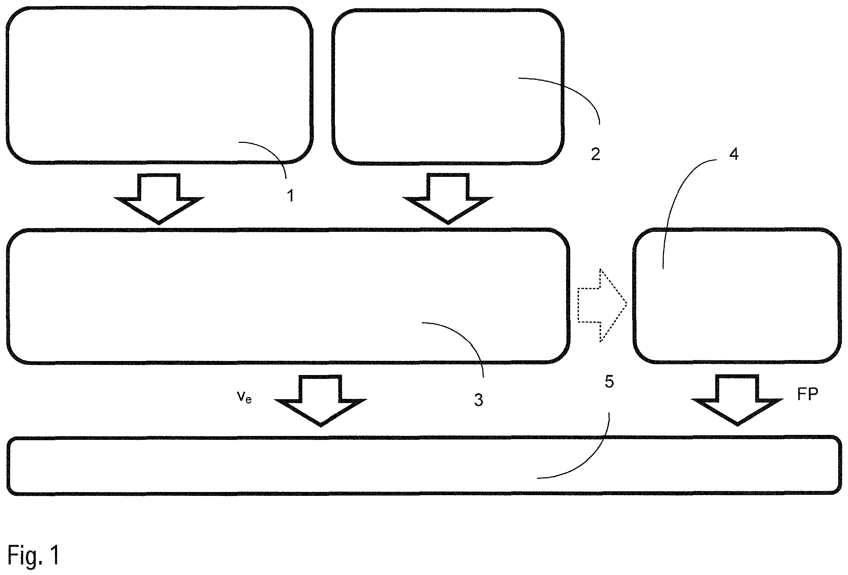

In der Zeichnung sind Ausführungsbeispiele der Erfindung dargestellt. Es zeigt
- Fig. 1: die wesentlichen erforderlichen funktionellen Komponenten zur Durchführung des dem Steuersystem zugrundeliegenden Betriebsverfahrens.

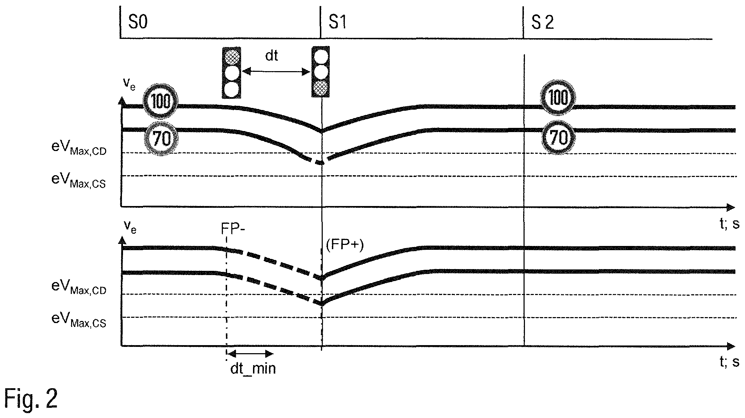

- Fig. 2: Beispiel 1: Aktuelle Situation ausgehend von zugeschaltetem Verbrennungsmotor und roter Ampelphase; erste Situation in naher Zukunft: Wechsel auf grüne Ampelphase nach einer langen Verzögerung (bei ausreichender Verzögerungsdauer); zweite Situation mit einer erwarteten Geschwindigkeit (z.B. Tempolimit) oberhalb der maximalen E-Fahrgeschwindigkeit.

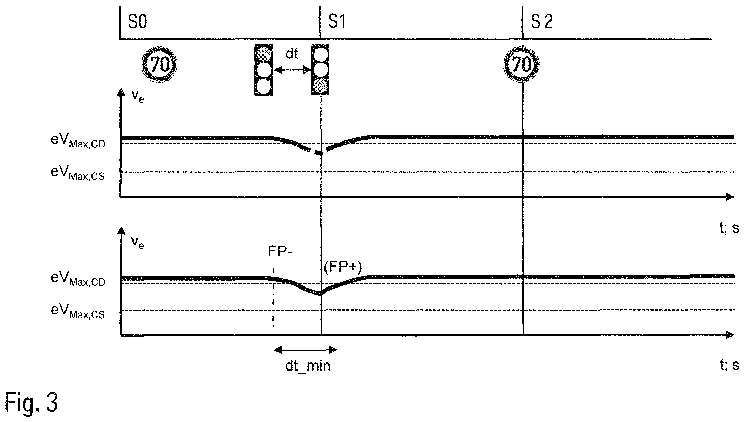

- Fig. 3: Beispiel 2: Aktuelle Situation ausgehend von zugeschaltetem Verbrennungsmotor und roter Ampelphase; erste Situation in naher Zukunft: Wechsel auf grüne Ampelphase nach einer kurzen Verzögerung (bei nicht ausreichender Verzögerungsdauer); zweite Situation mit einer erwarteten Geschwindigkeit oberhalb der maximalen E-Fahrgeschwindigkeit.

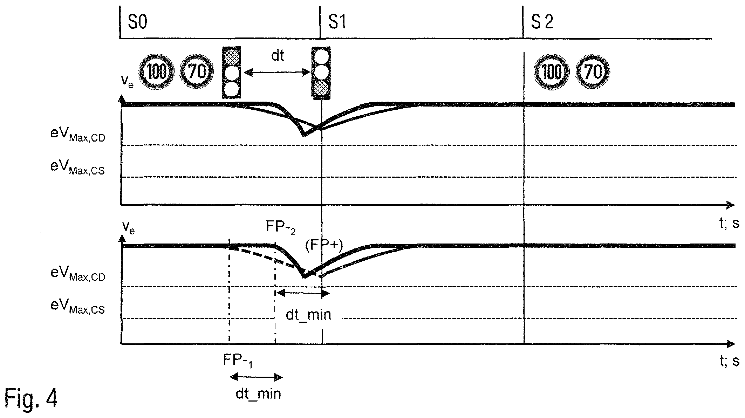

- Fig. 4: Beispiel 3: Aktuelle Situation ausgehend von zugeschaltetem Verbrennungsmotor und roter Ampelphase; erste Situation in naher Zukunft: Fall 1 mit Wechsel auf grüne Ampelphase nach langer Verzögerung (bei ausreichender Verzögerungsdauer), z.B. weil Reaktion des Fahrers auf Grüne-Welle-Assistent, und Fall 2 mit Wechsel auf grüne Ampelphase nach einer kurzen Verzögerung (bei nicht ausreichender Verzögerungsdauer), weil keine Reaktion des Fahrers auf Grüne-Welle-Assistent; zweite Situation mit einer erwarteten Geschwindigkeit oberhalb der maximalen E-Fahrgeschwindigkeit.

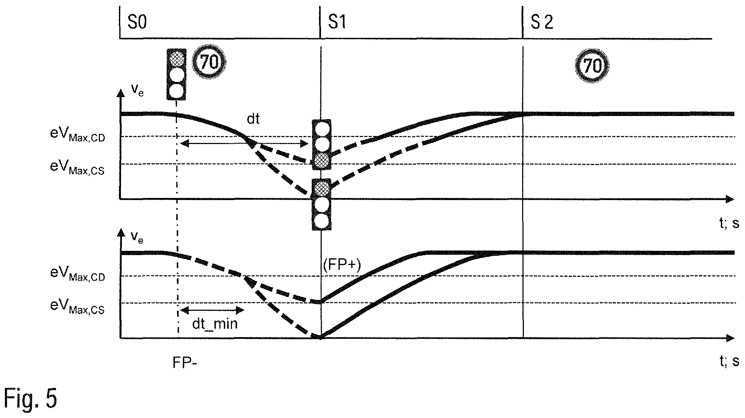

- Fig. 5: Beispiel 4: Aktuelle Situation ausgehend von zugeschaltetem Verbrennungsmotor und roter Ampelphase; erste Situation in naher Zukunft: Fall 1 (oben) mit Wechsel auf grüne Ampelphase und Fall 2 (unten) mit Verbleib in roter Ampelphase - beide Fälle mit vergleichsweise langen Verzögerungen und Beschleunigungen bei erreichter neuer Zielgeschwindigkeit oberhalb der maximalen E-Fahrgeschwindigkeit erst in der zweiten Situation (S2) in naher Zukunft.

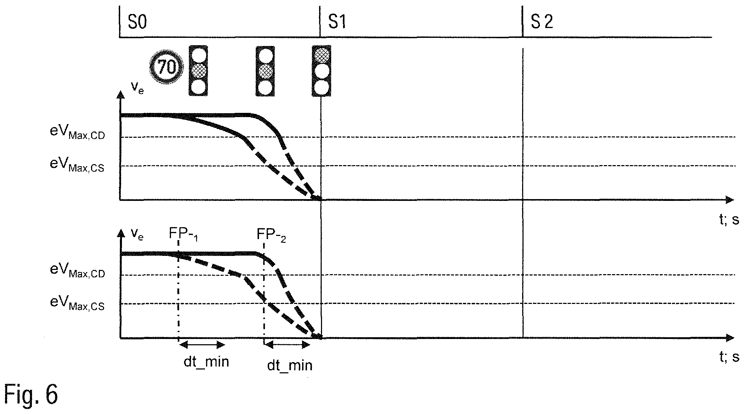

- Fig. 6: Beispiel 5: Aktuelle Situation ausgehend von zugeschaltetem Verbrennungsmotor und oranger Ampelphase; erste Situation in naher Zukunft: Wechsel auf rote Ampelphase bei ausreichender Dauer, in der kein Betrieb des Verbrennungsmotors benötigt wird (Summe aus Verzögerungs- und Stillstandzeit).

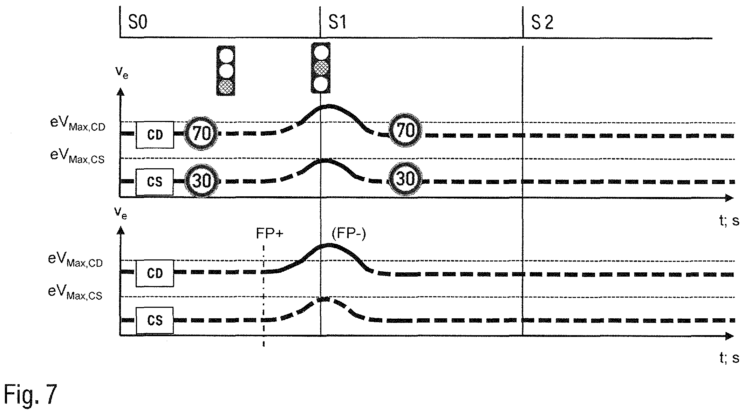

- Fig. 7: Beispiel 6: Aktuelle Situation ausgehend von abgeschaltetem Verbrennungsmotor und grüner Ampelphase; erste Situation in naher Zukunft: Wechsel auf (rote Ampelphase über) orange Ampelphase - führt zu kurzem Lastanstieg.

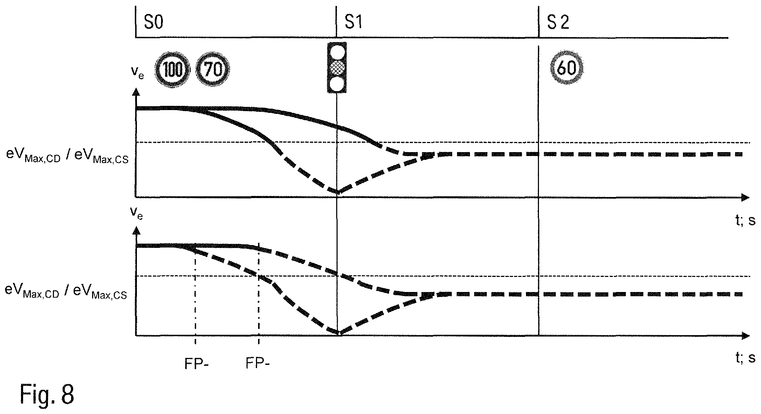

- Fig. 8: Beispiel 7: Aktuelle Situation ausgehend von eingeschaltetem Verbrennungsmotor; erste Situation Einfahrt in E-Fahrzone mit frühzeitigem Ablegen bei Lastwegnahme (F-), da nach der Ampel (Situation 2) definitiv bekannt ist, dass die Zielgeschwindigkeit unterhalb der maximalen E-Fahrgeschwindigkeit liegt.

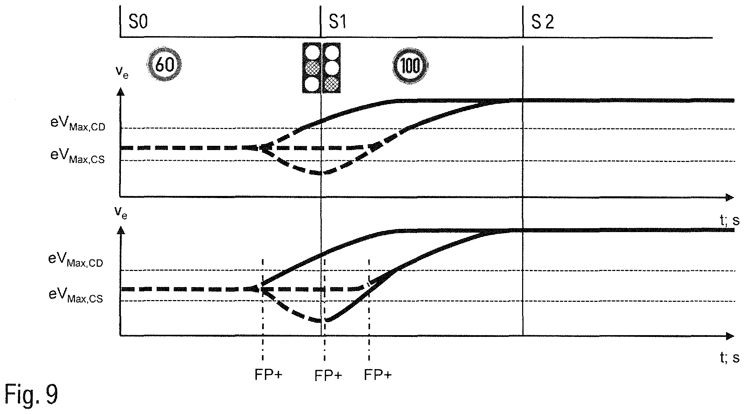

- Fig. 9: Beispiel 8: Aktuelle Situation ausgehend von ausgeschaltetem Verbrennungsmotor (d.h. Fahrt mit Geschwindigkeit unterhalb der maximalen E-Fahrgeschwindigkeit); erste Situation ist eine Stadtausfahrt nach grüner Ampel mit frühzeitigem Zustart bei Lastzunahme (F+) bzw. Beginn der Beschleunigung.

In Fig. 1 sind ein fahrzeugeigenes Sensorsystem 1 beispielsweise bestehend aus einer Kamera und einem Frontradar zur Erkennung von Verkehrsschildern und Vorderfahrzeugen sowie ein Navigationssystem 2 zur Verkehrsführungserkennung und Stauprognose dargestellt. Das Sensorsystem 1 umfasst auch eine Sensorik zur Ampelerkennung- und/oder Ampelprognose. Alternativ kann die Ampelvorausschau auch über ein lernendes Backendsystem realisiert bzw. unterstützt werden. Eine Ampelvorausschau kann in die Bestimmung des erwarteten Geschwindigkeitsverlaufs einfließen. Die Daten dieser beiden Systeme 1 und 2 sind Eingangssignale eines Vorausschau-Moduls 3. Das Vorausschau-Modul 3 ist zur Ermittlung eines erwarteten Geschwindigkeitsverlaufs vₑ und/oder eines Lastverlaufs aufgrund dieser Daten ausgestaltet und kann ein Funktionsmodul einer hier nicht näher dargestellten elektronischen Steuereinheit sein. Zur Erfassung der Fahrerinteraktion ist hier beispielsweise ein Fahrpedalsensor 4 vorgesehen, dessen Ausgangssignal FP den aktuellen Lastwunsch bzw. den Lastwunschverlauf des Fahrers wiedergibt. Dabei sind für die Erfindung insbesondere Wechsel von lastreduzierenden und lasterhöhenden Fahrerinteraktionen über das Fahrpedal 4 relevant. Das Ausgangssignal FP sowie der im Vorausschau-Modul 3 ermittelte erwartete Geschwindigkeitsverlauf ve sind Eingangssignale eines Steuer-Funktionsmoduls 5, das ebenfalls Teil der Steuereinheit ist. Im Steuer-Funktionsmodul 5 ist vorzugsweise ein Software-Programm-Produkt enthalten, durch das die Betriebsstrategie des erfindungsgemäßen Steuersystems realisiert wird.

Die Betriebsstrategie baut auf folgendem Stand der Technik auf: Wird die aktuell gültige E-Fahr-Geschwindigkeitsgrenze eV_{Max} durch die Ist-Geschwindigkeit unterschritten, wird nach dem Stand der Technik der Verbrennungsmotor abgelegt. Wird die aktuell gültige E-Fahr-Geschwindigkeitsgrenze eV_{Max} durch die Ist-Geschwindigkeit überschritten, wird nach dem Stand der Technik der Verbrennungsmotors sofort zugestartet. Gleiches gilt bei Überschreiten bzw. Unterschreiten geschwindigkeits- und ladungszustandsabhängig definierter Zustart- bzw. Ablegegrenzen durch den Lastwunsches seitens des Fahrers. Durch die Erfindung wird der erwartete Geschwindigkeitsverlauf vₑ und/oder analog der erwartete Lastverlauf im Hinblick auf diese bisher starr gesetzten Grenzen betrachtet. Die in naher Zukunft liegenden hier zwei Situationen S1 und S2 können erfindungsgemäß zur Verschiebung und/oder zum Ignorieren dieser bisher situationsunabhängigen vorgegebenen E-Fahr-Geschwindigkeitsgrenzen und -Lastgrenzen führen. Details zu dieser Betriebsstrategie werden anhand der Beispiele gemäß den Figuren 2 bis 7 erläutert:
In den Figuren 2 bis 9 sind ausgehend von einer aktuellen Situation SO zu erwartende Geschwindigkeitsverläufe vₑ für eine erste Situation S1 in naher Zukunft und möglicherweise auch für eine zweite Situation S2 in naher Zukunft dargestellt. Diese drei Situationen liegen in einem definierten Vorausschauhorizont von beispielsweise etwa 2 km. In jeder Figur ist oben die Betriebsstrategie nach dem Stand der Technik anhand der Geschwindigkeitsverläufe vₑ mit überlagerter Darstellung eines zugestarteten oder abgelegten Verbrennungsmotors dargestellt. Unten ist analog jeweils die Betriebsstrategie nach der Erfindung dargestellt. Dabei ist mittels der durchgezogenen Linie jeweils die Geschwindigkeit ve bei zugestartetem Verbrennungsmotor und mittels der gestrichelten Linie jeweils die Geschwindigkeit vₑ bei abgelegtem Verbrennungsmotor dargestellt.

In Fig. 2 ist als aktuelle Situation SO zunächst eine Konstantfahrt (jeweils oberes Beispiel 100 km/h, jeweils unteres Beispiel 70 km/h) mit eingeschaltetem Verbrennungsmotor dargestellt. Während der aktuellen Situation SO führt der Fahrer eine lastreduzierende Fahrerinteraktion FP- (z. B. Loslassen des Fahrpedals) aus, da beispielsweise er selbst oder optional ein Grüne-Welle-Assistent im Fahrzeug aktuell eine rote Ampel gesichtet hat. Über eine an sich bekannte Ampelprädiktion erhält die mindestens eine Steuereinheit, die auch aus mehreren Steuereinheiten - hier 3 und 5 - zusammengesetzt sein kann, auch Eingangssignale zur Erkennung mindestens einer in naher Zukunft vorherrschenden Situation S1 bezüglich eines erwarteten Geschwindigkeitsverlaufs ve und einem bevorstehenden Ampelphasenwechsel. Gemäß Fig. 2 findet beim Übergang in die in naher Zukunft vorherrschende Situation S1 ein Ampelphasenwechsel auf grün statt, den die Steuereinheit 3, 5 zeitlich prädizieren kann. Wenn die Dauer dt der Abnahme des erwarteten Geschwindigkeitsverlaufs ve nach der Fahrerinteraktion FP- bist zum Eintritt in die erste in naher Zukunft vorherrschende Situation S1 größer als eine vorgegebene Mindestdauer dt_min ist, wird der Verbrennungsmotor bereits mit Auftreten der Fahrerinteraktion FP- in der aktuellen Situation S0 unabhängig von einer aktuell vorgegebenen E-Fahr-Geschwindigkeitsgrenze eV_{Max,CD} oder eV_{Max,CS} abgelegt (gestrichelte Linien).

Vorzugsweise wird danach bei anschließendem erwarteten zunehmenden Geschwindigkeitsverlauf ve in einer zukünftigen Situation S1 und möglicherweise auch S2 auf einen Wert oberhalb der aktuell gültigen E-Fahr-Geschwindigkeitsgrenze eV_{Max,CD} bzw. eV_{Max,CS} ein erneutes Zustarten des Verbrennungsmotors bereits beim Übergang von der aktuellen Situation S0 zur zukünftigen Situation S1 und gleichzeitig erneuter lasterhöhender Fahrerinteraktion FP+ vorgenommen.

Beim Beispiel gemäß Fig. 2 wird insbesondere auf eine prädizierte vergleichsweise lange Verzögerung vor der lasterhöhenden Fahrerinteraktion FP+ bei grüner Ampel bzw. beim Eintritt in die Situation S1 reagiert, um die Effizienz und das E-Fahrerlebnis durch Berücksichtigung einer ungefähren Dauer der Ampelphasen zu erreichen.

Fig. 3 zeigt ein Beispiel ähnlich Fig. 2, wobei hier die Dauer dt der Abnahme des erwarteten Geschwindigkeitsverlaufs ve nach der Fahrerinteraktion FPbis zum Eintritt in die erste in naher Zukunft vorherrschende Situation S1 kleiner als eine vorgegebene Mindestdauer dt_min ist, z.B. weil in naher Zukunft ein Wechsel der Ampelphase auf grün bevorsteht. Bei diesem Beispiel wird der Verbrennungsmotor, unabhängig von den nach Stand der Technik definierten maximalen E-Fahrgeschwindigkeiten, nicht abgelegt. Grund hierfür ist, dass nach der Ampel die erwartete Geschwindigkeit wieder oberhalb der maximalen E-Fahrgeschwindigkeit liegt und damit ohnehin ein Zustart des Verbrennungsmotors erforderlich ist. Werden die Vorgaben durch die maximalen E-Fahrgeschwindigkeiten situationsbedingt und unter Vorausschau bestehend aus Dauer der Ampelphasen und erwarteter Geschwindigkeit nach der Ampel ignoriert, wird ein kurzzeitiges Ablegen des Verbrennungsmotors unterbunden.

Beim Beispiel gemäß Fig. 3 wird insbesondere auf eine prädizierte vergleichsweise kurze Verzögerung vor der lasterhöhenden Fahrerinteraktion FP+ bei grüner Ampel bzw. beim Eintritt in die Situation S1 reagiert, um die Anzahl der Zustarts zu reduzieren und ein nur kurzzeitiges Ablegen an der Ampel durch Berücksichtigung einer ungefähr bekannten Dauer der Ampelphase und damit Dauer der Verzögerung (bzw. Zielgeschwindigkeit an der Ampel) zu vermeiden.

In Fig. 4 werden zwei Fälle im Hinblick auf die Reaktion oder die Nicht-Reaktion des Fahrers auf einen möglicherweise aktivierten Grüne-Welle-Assistenten dargestellt. Im Fall 1 führt die lastreduzierende Fahrerinteraktion F-₁ erfindungsgemäß zum Abschalten des Verbrennungsmotors, da ein Wechsel auf eine grüne Ampelphase in Situation S1 noch so lange dauert, dass eine nun beginnende Verzögerung die Mindestdauer dt_min überschreiten wird. Denn hier reagiert der Fahrer frühzeitig auf einen Grüne-Welle-Assistenten, der die grüne Ampel bereits in der aktuellen Situation S0 mitteilen kann. Im Fall 2 findet keine Reaktion des Fahrers auf den Grüne-Welle-Assistenten statt und der Wechsel der Ampelphase auf grün findet zudem zeitlich eher statt. Die lastreduzierende Fahrerinteraktion F-₂ führt erfindungsgemäß nicht zum Abschalten des Verbrennungsmotors, da ein Wechsel auf eine grüne Ampelphase in Situation S1 kurz bevorsteht und somit die vorgegebene Mindestdauer dt_min durch die lastfreie Verzögerung nicht erreichbar ist. Mit Hilfe der Ampelphasenprädiktion ist es möglich die Verzögerungszeit und insbesondere die lastfreie Zeit inkl. Standzeit an der Ampel zu ermitteln, und somit zu entscheiden, ob sich ein Ablegen des Verbrennungsmotors mit Lastwegnahme seitens des Fahrers aus Effizienzaspekten lohnt. Hierbei ist der Verbrauch durch das Starten des Verbrennungsmotors mit dem Leerlaufverbrauch über die lastfreie Zeit (abzüglich der Zeit im Schubbetrieb) hinweg zu vergleichen. Es ist also entscheidend, wie lange die lastfreie Zeit sein wird, in der man aus Effizienzgründen den Verbrennungsmotor ausschalten kann. Überschreitet diese Zeit eine Mindestdauer lohnt es sich den Verbrennungsmotor abzuschalten, andernfalls sollte dieser aktiviert bleiben.

In Fig. 5 ist eine ähnliche Situation wie in Fig. 2 dargestellt, wobei im Fall 1 (oben) in Situation S1 ein Wechsel auf eine grüne Ampelphase und im Fall 2 (unten) in Situation S1 ein Verbleib in roter Ampelphase stattfindet. Beide Fälle weisen vergleichsweise lange Verzögerungen und Beschleunigungen bei erreichter neuer Zielgeschwindigkeit erst in der zweiten Situation S2 auf.

Beim Beispiel gemäß Fig. 5 wird die Effizienz und die Response durch Berücksichtigung einer ungefähr bekannten Zielgeschwindigkeit an der Ampel bzw. beim Übergang zu Situation S1 erhöht.

Beim Beispiel gemäß Fig. 6 findet beim Übergang zu Situation S1 ein Wechsel auf eine rote Ampelphase statt bzw. die Ampel bleibt weiterhin auf Rot. Der erwartete Geschwindigkeitsverlauf ve endet beim Übergang zu Situation S1 bei Null. Mit beiden lastreduzierenden Fahrerinteraktionen F-₁ und F-₂ wird jeweils der Verbrennungsmotor abgelegt, da in beiden Fällen an der Ampel bzw. beim Übergang zu Situation S1 keine unmittelbare Beschleunigung erwartet wird. Durch dieses frühe Ablegen des Verbrennungsmotors durch die erwartete Verzögerung werden die Effizienz und das E-Fahrerlebnis erhöht. Das Gleiche gilt für den Fall, dass der Fahrer bei grüner Ampel und prädizierter Rotphase den Grüne-Welle-Assistenten befolgt und frühzeitig verzögert.

In Fig. 7 wird von einem E-Fahrbetrieb in der aktuellen Situation S0 ausgegangen. Unverzüglich mit lastererhöhender Fahrerinteraktion FP+ in der aktuellen Situation S0 wird der abgeschaltete Verbrennungsmotor zugeschaltet, wenn ein bevorstehender Wechsel auf eine rote Ampelphase beim Übergang in die zukünftige Situation S1 erwartet wird und z.B. gleichzeitig eine größere Geschwindigkeitsdifferenz einschließlich einer Überschreitung der maximalen E-Fahrgeschwindigkeit zum Passieren der Ampel vor Erreichen der Rotphase erforderlich ist und/oder die aktuelle Geschwindigkeit weit genug unterhalb des erlaubten Tempolimits liegt; denn dann wird davon ausgegangen, dass der Fahrer bei oranger Ampelphase Gas gibt und nicht an der roten Ampel halten wird. Reicht hingegen eine leichte Geschwindigkeitserhöhung ohne eine Überschreitung der maximalen E-Fahrgeschwindigkeit zum Passieren der Ampel vor Erreichen der Rotphase, so setzt die Betriebsstrategiefunktion in Abhängigkeit von aktueller Last und Geschwindigkeit eine Zustartrobustheit um. Somit kommt es anders als nach Stand der Technik nicht zu einem lastbedingten und letztlich unnötigen und kurzzeitigen Zustarten des Verbrennungsmotors, sobald der Fahrer beschleunigt.

Beim Beispiel gemäß Fig. 7 wird erfindungsgemäß die Effizienz durch Berücksichtigung einer ungefähren bekannten Zielgeschwindigkeit an der Ampel bzw. beim Übergang zu Situation S1 erhöht. Im ersten Fall (oben, außer Orts, CD-Betrieb) wird der Verbrennungsmotor mit der Fahrerinteraktion FP+ zugeschaltet, da der zu erwartende Geschwindigkeitsverlauf ve an der Ampel bzw. beim Übergang in die Situation S1 eine bestimmte Schwelle (hier z.B. obere E-Fahr-Geschwindigkeitsgrenze) deutlich überschreitet und somit die Leistung in den Vordergrund gestellt wird. Im zweiten Fall (unten, innerorts, CS-Betrieb) wird der Verbrennungsmotor mit der Fahrerinteraktion FP+ nicht zugeschaltet, da der zu erwartende Geschwindigkeitsverlauf vₑ an der Ampel bzw. beim Übergang in die Situation S1 eine bestimmte Schwelle (hier z.B. untere E-Fahr-Geschwindigkeitsgrenze) nicht oder nur unwesentlich überschreitet sowie keine große Geschwindigkeitserhöhung erwartet wird und somit die Zustartrobustheit in den Vordergrund gestellt wird.

Beim Beispiel 7 gemäß Fig. 8 ist die aktuelle Geschwindigkeit vor der Ampel oberhalb der maximalen E-Fahrgeschwindigkeit und die prädizierte Geschwindigkeit nach der Ampel unterhalb der maximalen E-Fahrgeschwindigkeit. In diesem Fall ist der Zustand der Ampel nicht relevant, es muss nur bekannt sein, dass eine Ampel vorliegt. Sobald vom Fahrer eine Verzögerung eingeleitet wird, soll im Zielzustand der Verbrenner sofort abgelegt werden. Aktuell erfolgt dies erst bei Unterschreitung der maximalen E-Fahrgeschwindigkeit. Das Beispiel zeigt eine vorteilhafte Maßnahme zur Steigerung der Effizienz und des E-Fahrerlebnisses, da die gesamte Verzögerung elektrisch gefahren wird, und sich somit auch ein erhöhtes Rekuperationspotenzial einstellt.

Das Beispiel 8 gemäß Fig. 9 beschreibt den umgekehrten Fall, wenn die aktuelle Geschwindigkeit vor der Ampel unterhalb und die prädizierte Geschwindigkeit nach der Ampel oberhalb der maximalen E-Fahrgeschwindigkeit liegt. Nach dem Stand der Technik wird erst bei Überschreitung der maximalen E-Fahrgeschwindigkeit oder der E-Fahrlastgrenze zugestartet. Gemäß der vorliegenden Erfindung hingegen startet die Steuereinheit bereits kurz nach Beginn der Beschleunigung den Verbrenner zu, sofern die Ampel auf Grün wechselt bzw. gewechselt hat. Aufgrund von Vorderfahrzeugen und zu großen Abständen zur Ampel kann der Ampelzustand nicht ohne weiteres direkt mit der Kamera erfasst werden, daher ist eine Ampelphasenprädiktion erforderlich, um entsprechend zu reagieren. Durch diese Maßnahme ergibt sich der Vorteil, dass das Ansprechverhalten (Response) für die Beschleunigung und der Zustart-Komfort erhöht werden. Außerdem wird elektrische Energie des Hochvoltspeichers für spätere Fahrabschnitte aufgehoben, in denen der rein elektrische Fahrbetrieb deutlich effizienter ist als der verbrennungsmotorische Fahrbetrieb.

## Patentansprüche

1. Steuersystem mit mindestens einer elektronischen Steuereinheit (3, 5) zur Steuerung eines Verbrennungsmotors in einem Hybridfahrzeug, wobei die Steuereinheit (3,5) derart ausgestaltet ist, dass sie Eingangssignale zur Erfassung von Daten zur Erkennung einer aktuellen Situation (S0) und zur Erkennung mindestens einer in naher Zukunft vorherrschenden Situation (S1, S2) bezüglich eines erwarteten Geschwindigkeitsverlaufs (vₑ) und/oder Lastverlaufs auswertet und dass sie das Zustarten oder Ablegen des Verbrennungsmotors bei Auftreten einer lastbezogenen Fahrerinteraktion (FP; FP-, FP+) in der aktuellen Situation (S0) unabhängig von einer aktuell vorgegebenen E-Fahr-Geschwindigkeitsgrenze (eV_{Max,CD}, eV_{Max,CS}) und/oder Lastgrenze steuert, wenn sie als eine in naher Zukunft vorherrschende Situation (S1) eine Ampelphase und ihre Dauer erkennt, **dadurch gekennzeichnet, dass** der erwartete Geschwindigkeitsverlauf (vₑ) mit ladezustandsabhängigen festen oder variablen maximalen E-Fahr-Geschwindigkeitsgrenzen (eV_{Max,CD}, eV_{Max,CS}) für rein elektrisches Fahren (E-Modus) bei geladenem Zustand und bei entladenem Zustand verglichen wird.

2. Steuersystem nach Anspruch 1, wobei die Steuereinheit (3, 5) derart ausgestaltet ist, dass sie unverzüglich bei lastreduzierender Fahrerinteraktion (FP-) in der aktuellen Situation (S0) mit zugeschaltetem Verbrennungsmotor und bei einem vom System erkannten langen Verzögerung aufgrund eines bevorstehenden Wechsel der Ampelphase auf Rot oder einer bekannten langen Restzeit der Ampelphase rot beim Übergang in die zukünftige Situation (S1) den Verbrennungsmotor zumindest bis zum Eintritt der zukünftigen Situation (S1) unabhängig vom Unterschreiten einer E-Fahr-Geschwindigkeits und/oder Lastgrenze (eV_{Max,CD}, eV_{Max,CS}) unmittelbar ablegt.

3. Steuersystem nach einem der vorangegangenen Ansprüche, wobei die Steuereinheit (3, 5) derart ausgestaltet ist, dass sie nur dann unverzüglich bei lastreduzierender Fahrerinteraktion (FP-) in der aktuellen Situation (S0) mit zugeschaltetem Verbrennungsmotor und bei einem vom System erkannten bevorstehenden Wechsel der Ampelphase beim Übergang in die zukünftige Situation (S1) den Verbrennungsmotor zumindest bis zum Eintritt der zukünftigen Situation (S1) unabhängig vom Unterschreiten einer E-Fahr-Geschwindigkeitsgrenze (eV_{Max,CD}, eV_{Max,CS}) ablegt, wenn die Dauer der Abnahme des erwarteten Geschwindigkeitsverlaufs (vₑ) bis zum Übergang in die zukünftige Situation (S1) eine vorgegebene Mindestdauer (dt_min) überschreitet.

4. Steuersystem nach einem der vorangegangenen Ansprüche, wobei die Steuereinheit (3, 5) derart ausgestaltet ist, dass bei erwartetem zunehmendem Geschwindigkeitsverlaufs (vₑ) in einer zukünftigen Situation (S1, S2) auf einen Wert oberhalb der aktuell gültigen E-Fahr-Geschwindigkeitsgrenze (eV_{Max,CD} bzw. eV_{Max,CS}) ein Zustarten des Verbrennungsmotors bereits bei Beginn der Beschleunigung bzw. Lastzunahme vorgenommen wird.

5. Steuersystem nach einem der vorangegangenen Ansprüche, wobei die Steuereinheit (3, 5) derart ausgestaltet ist, dass sie den Verbrennungsmotor unverzüglich mit lasterhöhender Fahrerinteraktion (FP+) in der aktuellen Situation (SO) bei abgeschaltetem Verbrennungsmotor zuschaltet, wenn ein bevorstehender Wechsel auf eine rote Ampelphase beim Übergang in die zukünftige Situation (S1) erwartet wird.

6. Steuersystem nach einem der vorangegangenen Ansprüche, wobei die Steuereinheit (3, 5) derart ausgestaltet ist, dass sie das Zustarten des Verbrennungsmotors mit lasterhöhender Fahrerinteraktion (FP+) in der aktuellen Situation (S0) bei abgeschaltetem Verbrennungsmotor und bei einem erkannten bevorstehenden Wechsel auf eine rote Ampelphase beim Übergang in die zukünftige Situation (S1) gezielt unterbindet, wenn der aktuelle oder erwartete Geschwindigkeitsverlauf (vₑ) eine aktuell vorgegebene E-Fahr-Geschwindigkeitsgrenze (eV_{Max,CS}) nicht überschreitet.

7. Verfahren zur Steuerung eines Verbrennungsmotors in einem Hybridfahrzeug mittels mindestens einer elektronischen Steuereinheit (3, 5) derart, dass Eingangssignale zur Erfassung von Daten zur Erkennung einer aktuellen Situation (S0) und zur Erkennung mindestens einer in naher Zukunft vorherrschenden Situation (S1; S1, S2) bezüglich eines erwarteten Geschwindigkeitsverlaufs (vₑ) und eines prädizierten Ampelphasen-Wechsels ausgewertet werden und dass abhängig davon sowie von einer lastbezogenen Fahrerinteraktion (FP) das Zustarten und Ablegen des Verbrennungsmotors unabhängig von einer aktuell vorgegebenen E-Fahr-Geschwindigkeitsgrenze (eV_{Max,CS}, eV_{Max,CS}) und/oder Lastgrenze gesteuert wird, **dadurch gekennzeichnet, dass** aber der erwartete Geschwindigkeitsverlauf (vₑ) mit den ladezustandsabhängigen festen oder variablen maximalen E-Fahr-Geschwindigkeitsgrenzen (eV_{Max,CD}, eV_{Max,CS}) für rein elektrisches Fahren (E-Modus) bei geladenem Zustand und bei entladenem Zustand verglichen wird.

## Claims

1. Control system with at least one electronic control unit (3, 5) for controlling a combustion engine in a hybrid vehicle, wherein the control unit (3, 5) is designed in such a way that it evaluates input signals for detecting data for identifying a current situation (S0) and for identifying at least one situation (S1, S2) prevailing in the near future with regard to an expected speed curve (vₑ) and/or load curve, and that it controls the restarting or shutting off of the combustion engine on the occurrence of a load-related driver interaction (FP; FP-, FP+) in the current situation (S0) independently of a currently specified E-travel speed limit (eV_{Max,CD}, eV_{Max,CS}) and/or load limit when it identifies a traffic light phase and its duration as a situation (S1) prevailing in the near future, **characterized in that** the expected speed curve (vₑ) is compared with charge-state-dependent fixed or variable maximum E-travel speed limits (eV_{Max,CD}, eV_{Max,CS}) for purely electric driving (E-mode) in a charged state and in a discharged state.

2. Control system according to Claim 1, wherein the control unit (3, 5) is designed in such a way that without delay in the presence of a load-reducing driver interaction (FP-) in the current situation (S0) with the combustion engine switched on, and with a long delay identified by the system because of a forthcoming change of the traffic light phase to red or of a known long remaining time of the red traffic light phase at the transition to the future situation (S1), it immediately shuts off the combustion engine at least until the occurrence of the future situation (S1) independently of falling below an E-travel speed and/or load limit (eV_{Max,CD}, eV_{Max,CS)}.

3. Control system according to one of the preceding claims, wherein the control unit (3, 5) is designed in such a way that in the presence of a load-reducing driver interaction (FP-) in the current situation (S0) with the combustion engine switched on, and with a forthcoming change of the traffic light phase identified by the system at the transition to the future situation (S1), it only immediately shuts off the combustion engine at least until the occurrence of the future situation (S1) independently of falling below an E-travel speed limit (eV_{Max,CD}, eV_{Max,CS}) if the duration of the reduction of the expected speed curve (vₑ) until the transition to the future situation (S1) exceeds a predetermined minimum duration (dt_min).

4. Control system according to one of the preceding claims, wherein the control unit (3, 5) is designed in such a way that, with an expected increasing speed curve (vₑ) in a future situation (S1, S2) to a value above the currently valid E-travel speed limit (eV_{Max,CD} or eV_{Max,CS}), the combustion engine is restarted right at the beginning of the acceleration or of the load increase.

5. Control system according to one of the preceding claims, wherein the control unit (3, 5) is designed in such a way that it restarts the combustion engine without delay with a load-increasing driver interaction (FP+) in the current situation (S0) with the combustion engine shut off, if a forthcoming change to a red traffic light phase is expected at the transition to the future situation (S1).

6. Control system according to one of the preceding claims, wherein the control unit (3, 5) is designed in such a way that it specifically prevents the restarting of the combustion engine with a load-increasing driver interaction (FP+) in the current situation (S0) with the combustion engine shut off and with an identified forthcoming change to a red traffic light phase at the transition to the future situation (S1) if the current or expected speed curve (vₑ) does not exceed a currently specified E-travel speed limit (eV_{Max,CS}).

7. Method for controlling a combustion engine in a hybrid vehicle by means of at least one electronic control unit (3, 5) in such a way that input signals for detecting data for identifying a current situation (S0) and for identifying at least one situation (S1; S1, S2) prevailing in the near future with regard to an expected speed curve (vₑ) and a predicted traffic light phase change are evaluated and that, depending on this and on a load-related driver interaction (FP), the restarting and shutting off of the combustion engine are controlled independently of a currently specified E-travel speed limit (eV_{Max,CD}, eV_{Max,CS}) and/or load limit, **characterized in that** the expected speed curve (vₑ) is compared, however, with the charge-state-dependent fixed or variable maximum E-travel speed limits (eV_{Max,CD}, eV_{Max,CS}) for purely electric driving (E-mode) in a charged state and in a discharged state.

## Revendications

1. Système de commande comprenant au moins une unité de commande électronique (3, 5) destinée à commander un moteur à combustion interne dans un véhicule hybride, l'unité de commande (3, 5) étant conçue de manière à recevoir des signaux d'entrée destinés à acquérir des données d'identification d'une situation actuelle (S0) et d'identification d'au moins une situation (S1, S2) qui prédominera dans un futur proche en ce qui concerne un profil de vitesse (vₑ) et/ou un profil de charge attendus et de manière à démarrer ou arrêter le moteur à combustion lorsqu'une interaction de conducteur (FP ; FP-, FP+), liée à la charge, se produit dans la situation actuelle (S0) indépendamment d'une limite de vitesse de conduite électrique (eV_{Max,CD}, eV_{Max,CS}), actuellement spécifiée, et/ou à commander une limite de charge lorsqu'elle identifie une phase de feu de signalisation et sa durée comme situation (S1) qui prédominera dans un futur proche, **caractérisé en ce que** le profil de vitesse attendu (vₑ) est comparé aux limites de vitesse de conduite électrique maximales fixes ou variables (eV_{Max,CD}, eV_{Max,CS}), dépendantes de l'état de charge, pour une conduite purement électrique (mode E) à l'état chargé et à l'état déchargé.

2. Système de commande selon la revendication 1, l'unité de commande (3, 5) étant conçue de manière à couper immédiatement le moteur à combustion interne au moins jusqu'à ce que la situation future (S1) se produise, en cas d'interaction de conducteur (FP-) dans le sens d'une réduction de charge dans la situation actuelle (S0) avec le moteur à combustion en marche et dans le cas d'un long retard détecté par le système en raison d'un passage imminent de la phase de feu de signalisation au rouge ou d'un long temps restant connu de la phase de feu de signalisation au rouge lors du passage à la situation future (S1), indépendamment du fait qu'une vitesse de conduite électrique et/ou limite de charge (eV_{Max,CD}, eV_{Max,CS}) pour les véhicules électriques soit dépassée ou non.

3. Système de commande selon l'une des revendications précédentes, l'unité de commande (3, 5) étant conçue de manière à ne couper le moteur à combustion interne au moins jusqu'à ce que la situation future (S1) se produise, sans tarder qu'en cas d'interaction de conducteur (FP-) dans le sens d'une réduction de charge dans la situation actuelle (S0) avec le moteur à combustion en marche et dans le cas où le système identifie un passage imminent dans la phase de feu de circulation lors du passage à la situation future (S1), indépendamment du fait qu'une limite de vitesse de conduite électrique (eV_{Max,CD}, eV_{Max,CS}) soit dépassée ou non, si la durée de la décroissance du profil de vitesse attendue (vₑ) jusqu'au passage à la situation future (S1) dépasse une durée minimale spécifiée (dt_min).

4. Système de commande selon l'une des revendications précédentes, l'unité de commande (3, 5) étant conçue de manière à procéder au démarrage du moteur à combustion interne déjà au début de l'accélération ou de la montée en charge dans le cas où un profil de vitesse (vₑ) augmente de manière attendue dans une situation future (S1, S2) à une valeur supérieure à la limite de vitesse de conduite électrique actuellement valide (eV_{Max,CD} ou eV_{Max,CS}).

5. Système de commande selon l'une des revendications précédentes, l'unité de commande (3, 5) étant conçue de manière à démarrer immédiatement le moteur à combustion interne avec une interaction de conducteur (FP+) dans le sens d'une augmentation de charge dans la situation actuelle (S0), lorsque le moteur à combustion interne est arrêté, si un passage imminent à une phase de feu de signalisation rouge est attendu lors du passage à la situation future (S1).

6. Système de commande selon l'une des revendications précédentes, l'unité de commande (3, 5) étant conçue de manière à empêcher spécifiquement le démarrage du moteur à combustion interne avec une interaction de conducteur (FP+) dans le sens d'une augmentation de charge dans la situation actuelle (S0), lorsque le moteur à combustion interne est arrêté et lorsqu'un passage à une phase de feu de signalisation rouge est identifié comme imminent lors du passage à la situation future (S1) si le profil de vitesse actuel ou prévu (vₑ) ne dépasse pas une limite de vitesse de conduite électrique actuellement spécifiée (eV_{Max,CS}).

7. Procédé de commande d'un moteur à combustion interne dans un véhicule hybride à l'aide d'au moins une unité de commande électronique (3, 5) de manière à évaluer des signaux d'entrée destinés à acquérir des données d'identification d'une situation actuelle (S0) et d'identification d'au moins une situation (S1 ; S1 , S2) qui prédominera dans un futur proche, par rapport à un profil de vitesse attendue (vₑ) et à un changement de phase de feu de signalisation prévu et à commander, en fonction de cela et d'une interaction de conducteur (FP) liée à la charge, le démarrage et l'arrêt du moteur à combustion interne indépendamment d'une limite de vitesse de conduite électrique actuellement spécifiée (eV_{Max,CS}, eV_{Max,CS}) et/ou d'une limite de charge, **caractérisé en ce que**
le profil de vitesse attendue (vₑ) est cependant comparé aux limites de vitesse de conduite électrique maximales fixes ou variables (eV_{Max,CD}, eV_{Max,CS}), en fonction de l'état de charge, pour une conduite purement électrique (mode E) à l'état chargé et à l'état déchargé.
